# EUROPEAN PATENT APPLICATION

(11) **EP 4 797 169 A1**
(43) Date of publication of application: **26.08.2026**
(21) Application number: 26155010.7
(22) Date of filing: 29.01.2026
(51) Int. Cl.: G06N 10/70

(54) **METHODS AND SYSTEMS FOR CHARACTERIZATION FREE ZERO NOISE EXTRAPOLATION**

(30) Priority: 24.02.2025 US 202563762391 P; 02.04.2025 US 202563782130 P
(71) Applicant: QEDMA Quantum Computing LTD, 6902068 Tel Aviv (IL)
(72) Inventor: GURWICH, Ilya, 5268101 RAMAT GAN (IL); MEYER, Adiel, 6250711 TEL AVIV (IL); BAIREY, Eyal, 6233617 TEL AVIV (IL); GOLAN, Omri, 7630015 REHOVOT (IL)
(74) Representative: Lavoix

(57) **Abstract**

A computer implemented method for error mitigation of a quantum circuit executed on a quantum processor is disclosed. The quantum circuit comprises one or more parameterized quantum gates G(θ), each associated with an error generator having an affine dependence on an absolute value of the gate parameter, including an idle error component and a linear error component. The method comprises selecting a target amplification factor for the linear error component and computing one or more gate transformations that replace a quantum gate with a product of sub gates whose parameters satisfy a parameter preservation criterion. The gate transformations are configured such that the linear error component is amplified by the target amplification factor while the idle error component is amplified by one or more idle amplification factors. The quantum circuit and one or more transformed quantum circuits are executed across multiple runs, noisy and noise amplified expectation values of an observable are collected, and a mitigated expectation value is computed by extrapolation to zero noise.

## Description

### TECHNOLOGICAL FIELD

The present disclosure relates to the field of quantum computing, specifically to the field of error mitigation techniques for parameterized quantum gates and circuits.

### BACKGROUND

Quantum computers are expected to dramatically extend the range of computational problems that can be solved efficiently, with far reaching applications across a wide range of industries and academic disciplines. However, the development of quantum computers capable of realizing this potential relies crucially on the reduction of errors - differences between the actual and ideal implementations of quantum logic operations.

Practical quantum processors remain limited by the presence of noise in the physical operations used to implement quantum gates. Such noise accumulates with circuit depth and can significantly distort the expectation values of observables measured at the end of a computation. While quantum error correction promises long term solutions, present day quantum devices do not support the fault tolerant overhead required for full error correction. As a result, error mitigation techniques that operate at the level of circuit execution and post processing have emerged as an important approach for improving computational accuracy on near term quantum processors.

Zero noise extrapolation is one such approach. It is based on executing the same quantum circuit at different effective noise levels and using the results to estimate the value of an observable at zero noise. Existing methods for zero noise extrapolation often impose constraints on the amplification of noise or require prior characterization of the underlying noise model. These constraints can limit efficiency, increase overhead, or reduce robustness in the presence of fluctuating or context dependent noise. There is therefore a need for improved methods that amplify noise in a controlled and predictable manner without relying on characterization, and that operate effectively for a broad class of noise models.

### GENERAL DESCRIPTION

In accordance with a first aspect of the presently disclosed subject matter, there is provided a computer implemented method of error mitigation for a quantum circuit to be executed on a quantum processor. The quantum circuit comprises one or more quantum gate *G*(*θ*) with a gate parameter *θ* and an error generator 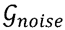 (*θ*) having affine dependence on an absolute value of the gate parameter such that 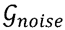 (*θ*) *=* 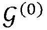 + 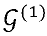 |*θ*|, wherein 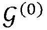 defines an idle error component and 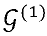 defines a linear error component. The method comprises (i) selecting a target amplification factor s for the linear error component; (ii) when the target amplification factor is such that *s* ≥ 2, computing one or more gate transformations, each gate transformation being configured to transform said quantum gate into a product of sub-gates, wherein: a) each sub-gate is an instance of the quantum gate *G* operated with a parameter value *θⱼ* and the parameter values over the product satisfy a parameter preservation criterion ∑*ⱼθⱼ = θ*; b) a transformed error generator of the sub-gates product comprises a transformed idle error component and a transformed linear error component, and when at least two gate transformations are computed: the transformed idle error component is an amplification of the idle error component by different idle amplification factors for each of said at least two gate transformations; the transformed linear error component is an amplification of the linear error component by the same target amplification factor for said at least two gate transformations; (iii) executing the quantum circuit and a transformed quantum circuit, in which, for each occurrence of the quantum gate *G*(*θ*) across a set of circuit executions, one of said gate transformations is selected according to a probability distribution configured such that an expectation, over said probability distribution, of the idle amplification factors equals the target amplification factor s; (iv) collecting a noisy expectation value of the observable from executions of the quantum circuit and a noise amplified expectation value from executions the transformed quantum circuit; (v) computing a mitigated expectation value of the observable by extrapolating to zero noise using the noisy expectation value and the noise amplified expectation value.

In addition to the above features, a computer implemented method of error mitigation, according to this aspect of the presently disclosed subject matter, can optionally comprise one or more of features (i) to (xv) below, in any technically possible combination or permutation:
i. the target amplification factor s for the error generator is selected based on a decay of an expectation value of an observable in the quantum circuit.
ii. the target amplification factor s is set based on a decay exponent A of an expectation value of an observable in the quantum circuit and a shot time ratio *f* between the transformed quantum circuit and the quantum circuit, according to: $s = 1 + 2 δ ; δ = \frac{λ \left(f\right)}{2 Λ} ;$
   *λ* being the solution of: $\sqrt{f} \left(λ\left(f\right)-1\right) {e}^{λ \left(f\right)} = 1$
iii. said at least two gate transformations are defined by two sets of parameter values $\left\{{θ}_{j}^{1}\right\}$ and $\left\{{θ}_{j}^{2}\right\}$, each satisfying ${\sum }_{j} \left|{θ}_{j}^{k}\right| = s \left|θ\right|$ for *k* ∈ {1,2}.
iv. the number of sub-gates differs between the two gate transformations, thereby providing different idle amplification factors for each gate transformation.
v. when s is non-integer, the different idle amplification factors of at least two of said gate transformations comprise: a first idle amplification factor equal to a greatest integer that is strictly lower than s; and a second idle amplification factor equal to a least integer that is strictly greater than s.
vi. the target amplification factor s is an integer, and wherein only one gate transformation is computed and applied across the set of circuit executions.
vii. further comprising, when the target amplification factor s is such that $1 < s < 2 :$
   a. computing a linear amplification gate transformation and an idle amplification transformation, each configured to transform the quantum gate into a product of sub-gates, wherein each sub-gate is an instance of the quantum gate *G* operated with a parameter value *θⱼ* and the parameter values over the product satisfy a parameter preservation criterion ∑*ⱼθⱼ = θ*;
   wherein a transformed error generator associated with each sub-gate product comprises a transformed idle error component and a transformed linear error component, and:
   - in the linear amplification transformation, the transformed linear error component is an amplification of the linear error component by a first linear amplification factor and the transformed idle error component is an amplification of the idle error component by a first idle amplification factor; and
   - in the idle amplification transformation, the transformed idle error component is an amplification of the idle error component by a second idle amplification factor and the transformed idle error component is an amplification of the idle error component by a second idle amplification factor;
      b. collecting a noisy expectation value obtained from executions of the quantum circuit, a linear-amplified expectation value obtained from executions of the circuit transformed by the linear amplification transformation, and an idle amplified expectation value obtained from executions of the circuit transformed by the idle amplification transformation;
      c. computing a mitigated expectation value of the observable by extrapolating to zero noise using the noisy expectation value, the linear amplified expectation value, and the idle amplified expectation value.
viii. wherein the first idle amplification factor and the second idle amplification factor are equal.
ix. wherein the second linear amplification factor is equal to 1.
x. wherein the quantum gate G is decomposed into a product of Pauli rank 1 gates prior to applying the gate transformations.
xi. wherein the gate transformations are applied to blocks of commuting gates.
xii. wherein the quantum processor comprises a trapped-ion system.
xiii. wherein the affine dependence of the error generator further comprises a quadratic term proportional to θ².
xiv. further comprising computing a quadratic transformation that transforms *G*(*θ*) into a product of N sub-gates *G*(*θ*/*N*)*^{N}* with an integer *N* ≥ 2, such that a corresponding idle error component is amplified by a factor N and a corresponding quadratic error component is amplified by a factor 1/*N*; and comprising additionally executing and collecting expectation value measurement of the observable for the quadratically transformed quantum circuit; and wherein the mitigated expectation value is computed using said collected expectation value of the quadratically transformed quantum circuit.
xv. further comprising computing a quadratic transformation transforms *G*(*θ*) into a product *G*(*θ*(1 *+ δ*)) *G*(*-θδ*) *G*(*0*)^{*N*-2} with an integer *N* ≥ 2 and a real parameter *δ* > 0, such that a corresponding idle error component is amplified by a factor N, a corresponding linear error component is amplified by a factor 1 + 2*δ,* and a corresponding quadratic error component is amplified by a factor 1 + 2*δ* + 2*δ*²; and comprising additionally executing and collecting expectation value measurement of the observable for the quadratically transformed quantum circuit; and wherein the mitigated expectation value is computed using said collected expectation value of the quadratically transformed quantum circuit.

In accordance with a second aspect of the presently disclosed subject matter, there is provided a system for error mitigation of a quantum circuit, the system comprising: a quantum processor configured to execute quantum circuits comprising one or more quantum gates *G*(*θ*) with a gate parameter *θ*, each quantum gate being associated with an error generator 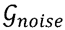 (*θ*) having affine dependence on an absolute value of the gate parameter such that 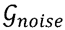 (*θ*) *=* 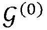 + 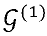 |*θ*|, wherein 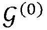 defines an idle error component and 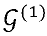 defines a linear error component; and a classical controller comprising a processor and a memory storing instructions that, when executed by the processor, cause the classical controller to:
a. select a target amplification factor *s*for the linear error component;
b. when the target amplification factor satisfies *s* ≥ 2, compute one or more gate transformations, each gate transformation being configured to transform the quantum gate *G*(*θ*) into a product of sub gates *G*(*θⱼ*) with parameter values {*θⱼ*} that satisfy a parameter preservation criterion Σ*ⱼ θⱼ = θ*, the product of sub gates being associated with a transformed error generator comprising a transformed idle error component and a transformed linear error component, and when at least two gate transformations are computed:
   - the transformed idle error component is an amplification of the idle error component by different idle amplification factors for each of said at least two gate transformations;
   - the transformed linear error component is an amplification of the linear error component by the same target amplification factor for said at least two gate transformations;
c. cause the quantum processor to execute the quantum circuit and to execute a transformed quantum circuit in which, for each occurrence of the quantum gate *G*(*θ*) across a set of circuit executions, one of the gate transformations is selected according to a probability distribution configured such that an expectation, over the probability distribution, of the idle amplification factors equals the target amplification factor *s;*
d. collect a noisy expectation value of at least one observable from executions of the quantum circuit and a noise amplified expectation value of the observable from executions of the transformed quantum circuit; and;
e. compute a mitigated expectation value of the observable by extrapolating to zero noise using the noisy expectation value and the noise amplified expectation value.

In addition to the above features, the system according to the second aspect of the presently disclosed subject matter can optionally comprise one or more of the features (i) to (xv) recited above in connection with the computer implemented method of the first aspect, in any technically possible combination or permutation, wherein the classical controller is configured to implement the corresponding method features and to cause the quantum processor to execute the resulting quantum circuits accordingly.

In the present disclosure, the following terms and their derivatives may be understood according to the below explanations:
A quantum circuit *U* may be represented as a product of quantum gates *Gᵢ* $U = {\prod }_{i} {G}_{i}$

Without loss of generality, the quantum gate *Gᵢ* may refer to Pauli-rank 1 gates so that the gate *Gᵢ* can be written as ${G}_{i} = {g}_{{t}_{i}} \left({θ}_{i}\right)$

With t being an index differentiating between the different gate types in the gate-set, and *θ* being a gate parameter (e.g. rotation angle).

The quantum gate may be noisy (i.e. not error-free) and represented by a super-operator G $G = {e}^{{G}_{ideal} + {G}_{noise}}$ where 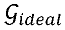 denotes the ideal generator i.e. the generator of the desired, noiseless operation and 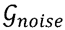 denotes the noise generator of the noise channel.

The term "Zero Noise Extrapolation" (ZNE) may refer to a technique including a step of amplifying 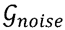 by a predefined factor, while not amplifying (e.g. preserving or maintaining) 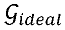 *.* In a further step, several (at least two) noisy expectation values of the observable of interest are used to extrapolate to a point of zero noise. There are several ways of amplifying the noise. The most basic way is unitary folding (UF), however, currently, the most efficient way is to characterize the noise model and amplify it probabilistically (Probabilistic Error Amplification - PEA).

The present disclosure proposes an efficient method for amplifying the noise generator 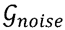 *.* To amplify the noise, it is actually not needed to know 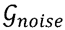 as long as there is parameter that scales up the noise in a known way. The parameter at hand may be the gate rotation angle *θ*. If the functional form 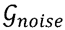 (*θ*) is known, the noise can be amplified by applying the transformation: $G \left(θ\right) \to {\prod }_{j} G \left({θ}^{\left(j\right)}\right)$

In other words, the quantum circuit may be transformed into a transformed quantum circuit in which each occurrence of the gate *G*(*θ*) may be replaced by a product of sub-gates, each implemented with a parameter value *θ*^{(*j*)}, wherein the set of *θ*^{(*j*)} is subject to a parameter preservation criterion: ${\sum }_{j} {θ}^{\left(j\right)} = θ$

Therefore, the ideal operation implemented by the gate is unchanged and the noise generator is amplified by a target amplification factor s: ${\sum }_{j} {G}_{noise} \left({θ}^{\left(j\right)}\right) = s {G}_{noise} \left(θ\right)$

It is noted that the special case of *θ*^{(*j*)} *=* (-1)^{*j*+1}*θ* corresponds to the standard Unitary Folding method, with *s* = 3 or more and which is hereby disclaimed.

In principle the present disclosure shares some similarity to the pulse-stretching method described in Kim et al., 2023b "Scalable error mitigation for noisy quantum circuits produces competitive expectation values", Nature Physics, 19(5):752-759. However, the latter requires pulse-level access and only works in very limited cases. Specifically, only if the gate's errors are dominated by idle-time errors (i.e. only depend on the pulse duration) and hence do not depend on the amplitude of the pulse that lowers as the pulse is stretched. Our method is more robust and does not require pulse-level access.

In the present disclosure, the noise generator may follow an affine dependence on the gate parameter or a quadratic dependence thereto i.e. ${G}_{noise} \left(θ\right) = {G}^{\left(0\right)} + {G}^{\left(1\right)} \left|θ\right|$ ${G}_{noise} \left(θ\right) = {G}^{\left(0\right)} + {G}^{\left(1\right)} \left|θ\right| + \frac{1}{2} {G}^{\left(2\right)} {θ}^{2}$

Wherein 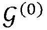 is an idle error component; 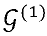 is a linear error component and 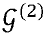 is a quadratic error component.

Among other possible examples, Molmer-Sorensen (MS) gates, that are widely used for trapped-ion systems, are well known for having an almost linearly scaling noise with the gate angle. Single qubit gates will be well approximated by the quadratic error model in almost all practical QPU realizations.

The present disclosure may apply whenever the error generator of a parameterized gate exhibits a known functional dependence on the gate parameter. The specific functional form may be linear, affine, quadratic, or any other well-behaved dependence. The method merely requires that each gate type be associated with a known functional form for its error generator; the super-operator coefficients 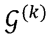 may differ from one gate instance to another. If different gate types follow different functional forms, the method may nevertheless be applied, provided that the parameter-preserving transformation is selected separately for each gate type so that the desired amplification factor is achieved for every gate.

The present disclosure may also apply to gates whose unitary operation has Pauli rank greater than one, such as iSWAP gates. A higher-rank gate may be decomposed into a sequence of Pauli-rank-1 rotations. When the parameterization of the higher-rank gate permits such a decomposition, the noise amplification achieved by transforming the full gate is equivalent to that obtained by decomposing the gate into rank-1 components, amplifying each component individually using the disclosed transformations, and composing the results.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
**FIG. 1** shows a flowchart illustrating a method for mitigating errors according to embodiments of the present disclosure.
**FIG. 2** show comparative data between methods according to embodiments of the present disclosure and prior art methods.
**FIG. 3** schematically illustrates a computer implementing a method according to embodiments of the present disclosure.
**FIG. 4** schematically illustrates a system implementing a method according to embodiments of the present disclosure.

### DETAILED DESCRIPTION OF EMBODIMENTS

Described herein are some examples of systems and methods useful for error mitigation of a quantum circuit executed on a processor.

In the following detailed description, numerous specific details are set forth in order to provide a thorough understanding of the subject matter. However, it will be understood by those skilled in the art that some examples of the subject matter may be practiced without these specific details. In other instances, well-known methods, procedures and components have not been described in detail so as not to obscure the description.

As used herein, the phrases "for example," "such as", "for instance" and variants thereof describe non-limiting examples of the subject matter.

Reference in the specification to "one example", "some examples", "another example", "other examples, "one instance", "some instances", "another instance", "other instances", "one case", "some cases", "another case", "other cases" or variants thereof means that a particular described feature, structure or characteristic is included in at least one example of the subject matter, but the appearance of the same term does not necessarily refer to the same example.

It should be appreciated that certain features, structures and/or characteristics disclosed herein, which are, for clarity, described in the context of separate examples, may also be provided in combination in a single example. Conversely, various features, structures and/or characteristics disclosed herein, which are, for brevity, described in the context of a single example, may also be provided separately or in any suitable subcombination.

Unless specifically stated otherwise, as apparent from the following discussions, it is appreciated that throughout the specification discussions utilizing terms such as "computing", "determining", "selecting", "executing", "collecting", "performing", or the like, may refer to the action(s) and/or process(es) of any combination of software, hardware and/or firmware. For example, these terms may refer in some cases to the action(s) and/or process(es) of a programmable machine, that manipulates and/or transforms data represented as physical, such as electronic quantities, within the programmable machine's registers and/or memories into other data similarly represented as physical quantities within the programmable machine's memories, registers and/or other such information storage, transmission and/or display element(s).

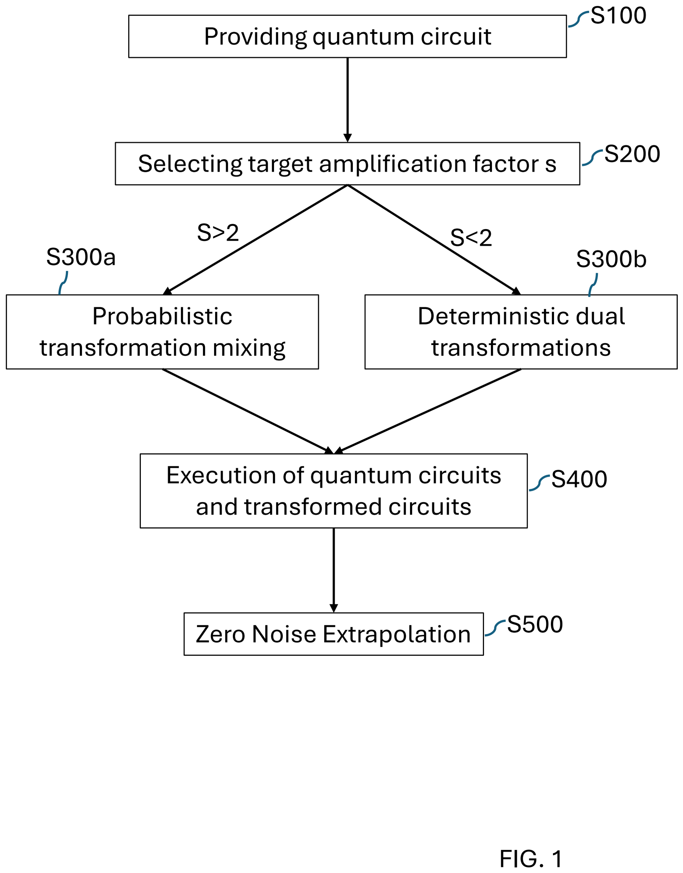

**FIG. 1** is a box diagram generally illustrating a computer implemented method of error mitigation for a quantum circuit according to embodiments of the present disclosure.

In a step **S100,** a quantum circuit to be executed on a quantum processor may be provided. The quantum circuit comprises one or more parameterized quantum gates *G*(*θ*). The functional dependence of the error generator of each gate is assumed to be known, for example exhibiting an affine dependence on the absolute value of the gate parameter.

In a further step **S200,** a target amplification factor *s* for the linear error component may be selected. The value of s determines the extent to which the linear part of the error generator will be amplified by the subsequent gate transformations. The target amplification factor may be chosen, for example, based on a decay behavior observed in the quantum circuit or on expected performance considerations for the zero-noise extrapolation process as explained in more details below. For example, when the decay parameter cannot be theoretically estimated, the target amplification may be refined after an initial run. The initial run may include an initial (small) mitigation batch and the value of s may be refined based on the noisy and amplified results obtained in the initial batch.

In some embodiments, the selection of the target amplification factor s may be based on quantitative information derived from the circuit, such as a decay behaviour of an expectation value of an observable. The decay may be characterized by a decay exponent A, and the selection of *s* may further take into account a shot time ratio *f* associated with the transformed circuit, as explained in more details below.

In a further step **S300a,** when the target amplification factor is greater than 2, one or more gate transformations are computed for each gate *G*(*θ*), each transformation replacing the gate with a product of sub-gates whose parameter values satisfy the parameter-preservation criterion Σ*ⱼ θⱼ = θ.*

The parameter values of each transformation are selected so that the linear error component is amplified by the target factor s. The idle amplification factor of a transformation is equal to the number of sub-gates in the product and can therefore differ between distinct transformations.

When s is an integer, a single gate transformation may be chosen in which the number of sub-gates is exactly *s*, so that the idle error component and the linear error component are both amplified by *s.*

When s is non-integer, no single transformation can produce an idle amplification factor equal to *s*, and therefore at least two transformations are used whose idle amplification factors are distinct and such that one is less than *s* (for example, the greatest integer strictly below *s*) and the other is greater than *s* (for example the least integer above *s*). A probability distribution is then assigned to these transformations so that the weighted average of their idle amplification factors is equal to the target amplification factor *s*. The probabilistic selection of these transformations during later circuit execution therefore ensures that the idle-error component is amplified by the factor *s* in expectation, while the linear-error component remains deterministically amplified by *s* for every transformation. In this manner, probabilistic mixing of the transformations produces the desired amplification while preserving the ideal operation of the circuit.

In a further step **S300b,** when the target amplification factor is in the range 1 < *s* < 2, a deterministic dual transformation routine is applied. A single gate transformation cannot jointly amplify the linear component and the idle component by the same factor s because the idle amplification factor of a transformation is equal to the number of sub-gates in the product which is greater than 2.

Therefore, two distinct gate transformation circuits are computed for each gate *G*(*θ*). Each gate transformation replaces the gate by a product of sub-gates whose parameter values satisfy the parameter-preservation criterion ∑*ⱼ θⱼ = θ*, so that the ideal operation of the gate remains unchanged. A first transformation, referred to as the linear-amplification transformation, produces a sub-gate product whose transformed error generator comprises a transformed linear error component that is an amplification of the linear error component by a first linear amplification factor and a transformed idle error component that is an amplification of the idle error component by a first idle amplification factor. A second transformation, referred to as the idle amplification transformation, produces a sub-gate product whose transformed error generator comprises a transformed idle error component that is an amplification of the idle error component by a second idle amplification factor and whose transformed linear error component is amplified by a second linear amplification factor. These two transformations therefore generate, respectively, a linearly amplified circuit variant and an idly amplified circuit variant. Executions of the original noisy circuit, the circuit transformed by the linear amplification transformation, and the circuit transformed by the idle amplification transformation provide three corresponding expectation values of the observable. These expectation values are subsequently used in the zero-noise extrapolation stage to compute a mitigated expectation value of the observable.

The expectation values measured from executions of the untransformed circuit and from executions of the circuit transformed by the first gate and second gate transformations enable to compute a mitigated expectation value 〈*O*〉ₘᵢₜᵢ using a zero-noise extrapolation process: $\begin{matrix}{\left〈O\right〉}_{miti} = \\ = {\left〈O\right〉}_{noisy}^{\frac{{s}_{1} {t}_{2} - {s}_{2} {t}_{1}}{\left({s}_{1}-1\right) \left({t}_{2}-1\right) - \left({s}_{2}-1\right) \left({t}_{1}-1\right)}} {\left〈O\right〉}_{amp , 1}^{\frac{{s}_{2} - {t}_{2}}{\left({s}_{1}-1\right) \left({t}_{2}-1\right) - \left({s}_{2}-1\right) \left({t}_{1}-1\right)}} {\left〈O\right〉}_{amp , 2}^{\frac{{t}_{1} - {s}_{1}}{\left({s}_{1}-1\right) \left({t}_{2}-1\right) - \left({s}_{2}-1\right) \left({t}_{1}-1\right)}}\end{matrix}$

Wherein:
〈*O*〉_{noisy} denotes the expectation values measured from executions of the untransformed circuit;
〈*O*〉_{amp,1}, 〈*O*〉_{amp,2} denotes the expectation values measured from executions of the circuit transformed by the first gate and second gate transformation, respectively;

Each of the first and second gate transformation is characterized by an idle error amplification factor *sₖ* and a linear error amplification factor *tₖ*, where *k* is the transformation index.

This expression is well-defined as long as (*s*₁ - 1)(*t*₂ - 1) *=* (*s*₂ - 1)(*t*₁ - 1), and provides the mitigated expectation value of the observable.

In some embodiments, the first idle amplification factor and the second idle amplification factor used in the deterministic dual-transformation route may be equal. In addition, the second transformation may be selected so that the second linear amplification factor remains equal to one, thereby amplifying only the idle error component while leaving the linear error component unchanged.

In a further step **S400,** the quantum processor executes the quantum circuit together with the transformed quantum circuits determined in steps S300a or S300b.

When the selected amplification factor satisfies *s* ≥ 2 and s is not an integer, the execution comprises running the original circuit and running the transformed quantum circuits obtained by selecting, for each circuit shot, one of the gate transformations prepared in step **S300a,** according to the probability distribution ensuring that the expected idle amplification factor equals *s*.

When the selected amplification factor satisfies *s* ≥ 2 and *s is* an integer, the execution comprises running the original circuit and running the single transformed quantum circuit obtained from the corresponding gate transformation of step **S300a.**

When the selected amplification factor satisfies 1 *< s* < 2, the execution comprises running the original circuit, the circuit transformed by the (first) linear amplification transformation, and the circuit transformed by the (second) idle amplification transformation prepared in step **S300b.**

In a further step **S500,** the measurement results obtained from the execution of the noisy quantum circuit and the one or more transformed quantum circuits are processed to compute a mitigated expectation value for the observable by extrapolating to the zero-noise limit.

When the target amplification factor satisfies *s* ≥ 2 and s is an integer, the noisy expectation value and the noise amplified expectation value obtained from the single transformed quantum circuit are used together to perform the zero-noise extrapolation.

When the target amplification factor satisfies *s* ≥ 2 and *s* is not an integer, the noisy expectation value and the noise amplified expectation value (obtained from the execution of the probabilistically selected transformed circuits) are combined in order to perform the zero-noise extrapolation.

When the target amplification factor satisfies 1 < *s* < 2, the noisy expectation value, the noise amplified expectation value obtained from execution of the quantum circuits transformed by the first (linear amplified) transformation, and the expectation value obtained from execution of the quantum circuits transformed by the second (idle amplified) transformation are combined to compute the mitigated expectation value using zero noise extrapolation.

In some embodiments, the error generator of each gate may comprise a quadratic error component in addition to the idle and linear components and the method may further include applying one or more quadratic gate transformations. The quadratic gate transformation may be selected to provide a controlled amplification of the quadratic error component while maintaining the parameter-preservation criterion. In one example, the quadratic transformation replaces the gate *G*(*θ*) with a product of *N* sub-gates *G*(*θ*/*N*), thereby amplifying the idle error component by a factor *N* and reducing the quadratic error component by a factor 1/*N*. In another example, the quadratic transformation may include a product formed by *G*(*θ*(1 + *δ*))*, G*(-*θδ*), and a sequence of sub-gates *G*(0), which amplifies the idle, linear, and quadratic error components according to predetermined amplification factors. The transformed quantum circuits obtained from these quadratic gate transformations may also be executed a corresponding expectation value may be incorporated into the zero noise extrapolation process, thereby enabling the computation of a mitigated expectation value of the observable under the quadratic noise model as explained in more details below.

To further illustrate the operation of the presently disclosed method and to provide additional technical context, the following sections present representative mathematical formulations and examples consistent with the method claimed herein and correspond to the theoretical background on which the method is based.

### Linear Case

When the error generator of a quantum gate exhibits a purely linear dependence on the absolute value of the gate parameter, the idle-error and quadratic-error components vanish, such that the entire noise of the gate scales linearly with the magnitude of the parameter of the gate i.e. 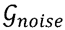 (*θ*) *=* 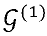 |*θ*|.

For a quantum gate *G*(*θ*), a gate transformation may be applied that replaces the gate by a product of two sub-gates operated respectively with parameters *θ*(1 + *δ*) and -*θδ*.

The parameters satisfy the parameter preservation criterion *θ*(1 + *δ*) *+ -θδ = θ*, so that the ideal operation of the gate is unchanged.

Because the linear component of the error generator depends on |*θ*|, the transformed product yields a transformed linear error component which is an amplification of the linear error component by a linear amplification factor of 1 + 2*δ*.

This, this transformation provides a controlled and predictable increase in the linear error contribution while preserving the intended gate operation.

Executions of the untransformed circuit and of the transformed circuit provide respectively a noisy expectation value and a noise amplified expectation value which enable a zero-noise extrapolation (ZNE) process. The ZNE process infers the expectation value of the observable corresponding to an ideal (noise free) execution of the circuit, also denoted 〈*O*〉*_{ideal}.* Using an exponential extrapolation, the corresponding mitigated expectation value of an observable *O* is; ${\left〈O\right〉}_{miti} = \frac{{\left〈O\right〉}_{noisy}^{1 + \frac{1}{2 δ}}}{{\left〈O\right〉}_{amp}^{\frac{1}{2 δ}}}$

The mitigated expectation value 〈*O*〉ₘᵢₜᵢ provides an estimate of the ideal expectation value 〈*O*〉*_{ideal},* obtained by extrapolating the measured noisy and noise amplified expectation values to the limit of zero noise.

Wherein:
*δ* is any positive real value;
〈*O*〉*_{noisy}* denotes the expectation value of the observable *O* measured from the noisy quantum circuit (i.e. untransformed);
〈*O*〉*ₐₘₚ* denotes the expectation value measured from the noise amplified circuit in which each instance of the quantum gate *G*(*θ*) is replaced with the above transformation.

Although any amplification parameter *δ* may be employed, the efficiency of the mitigation process depends on choosing an optimal value. To determine this value, it is useful to consider two parameters.

The first optimization parameter is the decay exponent A, defined as A ≡ ln (〈*O*〉*_{ideal}*/〈*O*〉*_{noisy},* which characterizes the decay induced by the quantum circuit noise. The second optimization parameter is the shot time ratio *f*, which is the ratio between the time required to execute the noise amplified circuit and the time required to execute the (untransformed) quantum circuit. In architectures where gate execution time dominates the shot time, doubling the number of gates results in *f* approaching 2, whereas in systems dominated by reset time, *f* is typically close to 1.

The optimal amplification parameter satisfies $δ = \frac{λ \left(f\right)}{2 Λ}$

Where *λ*(*f*) is the solution of the equation of $\sqrt{f} ∗ \left(λ\left(f\right)-1\right) {e}^{λ \left(f\right)} = 1$

For values of *f* between 1 and 2, the corresponding values of *λ*(*f*) lie approximately between 1.2 and 1.3, more particularly between 1.21 and 1.28.

The performance of the ZNE process may be quantified by an overhead, defined as the ratio between (i) the total quantum processor time required to achieve a specified statistical precision when both the noisy quantum circuit and the noise amplified transformed circuits are executed, and (ii) the time required to achieve the same statistical precision using only the noisy quantum circuit. Using the optimal value of *δ*, the overhead becomes $W = {\left[{e}^{Λ}\left(1+Λ\frac{1 + \sqrt{f} {e}^{λ \left(f\right)}}{λ \left(f\right)}\right)\right]}^{2}$

For the range 1 ≤ *f* ≤ 2, the quantity $\frac{1 + \sqrt{f} {e}^{λ \left(f\right)}}{λ \left(f\right)}$ varies from about 3.6 to about 4.7.

### Affine case

In some embodiments, the idle error component of the error generator may not be negligible, and the duration of the gate does not tend to zero as the gate parameter *θ* approaches zero. This behavior is typical, for example, for Molmer-Sorensen (MS) gates where T₂ cannot be neglected. In such cases, the idle error component 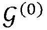 cannot be disregarded when constructing the gate transformations. Several approaches may then be considered.

### Low amplification factors

A first approach corresponds to applying the same gate transformation used in the purely linear case, but selecting the parameter *δ* = 0.5. Choosing *δ* = 0.5 may ensure that the resulting transformation amplifies the idle error component and the linear error component by the same factor. Because both components are amplified equally, the method remains applicable even when idle errors are significant.

A second approach uses two amplification operations. The first amplification is the same as the one described in the linear case. The second amplification replaces each gate *G*(*θ*) by a product of two sub-gates *G*(*θη*) and *G*(*θ*(1 *- η*)), where the parameter *η* lies between 0 and 0.5. This additional amplification may be realized in different forms, including variants that mix the amplification of the linear and idle error components. However, alternative forms generally provide lower efficiency.

Using the first approach, no modification to the mitigation process is required. Under the second approach, the second amplification leaves the linear error component unchanged while amplifying the idle error component in the same manner as the first amplification. In this case, the mitigated expectation value of an observable *O* may be expressed as ${\left〈O\right〉}_{miti} = \frac{{\left〈O\right〉}_{noisy}^{2} {\left〈O\right〉}_{amp 0}^{- 1 + \frac{1}{2 δ}}}{{\left〈O\right〉}_{amp}^{\frac{1}{2 δ}}}$ where 〈*O*〉*ₐₘₚ* denotes the expectation value obtained from the first amplification and 〈*O*〉_{*amp*0} denotes the expectation value obtained from the second amplification.

To determine the optimal choice of parameters in this setting, the decay exponent A defined previously may be decomposed into two components: Λ₀, associated with the case *G*⁽¹⁾ = 0, and Λ₁, associated with the case *G*⁽⁰⁾ = 0, such that A = Λ₀ + Λ₁. It can be shown that, as long as Λ₁ ≤ *λ*(1), the optimal strategy is to apply only the first approach, that is, selecting *δ* = 0.5 with a single amplification. When Λ₁ exceeds *λ*(1), the optimal choice becomes $δ = \frac{λ \left(1\right)}{2 {Λ}_{1}} ,$ together with the second amplification, which remains effective for any value of *η* between 0 and 0.5. The corresponding overhead is given by $W = \left\{\begin{matrix}{\left[{e}^{Λ}\left(2+\sqrt{f} {e}^{Λ}\right)\right]}^{2} , & for {Λ}_{1} \leq λ \left(1\right) \\ {\left[{e}^{Λ + λ \left(1\right)}\left(2\left(λ\left(1\right)-1\right)+\sqrt{f} {e}^{{Λ}_{0}}\left({Λ}_{1}-λ\left(1\right)+1\right)\right)\right]}^{2} , & for {Λ}_{1} > λ \left(1\right)\end{matrix}\right.$

When evaluating the amplification and the overhead, it is assumed that A is known. In practice, estimating A may require an iterative procedure. Such an estimate will necessarily introduce some error, and the optimal overhead may not be achieved exactly. This limitation is inherent to all forms of zero-noise extrapolation. The present method however provides an advantage in that, as long as Λ₁ ≤ *λ*(1), the amplification factor is robust and does not depend sensitively on the exact value of A, allowing for more efficient use of the method in this regime compared to other methods.

### High amplification factor

The gate transformations described above relied on replacing each gate by products of two sub-gates. This limits the value of s used in the amplification to *s* ≤ 2 for small values of the decay exponent. Larger values of *s* would require additional sub-gates to be introduced in order to amplify the idle error component by the same factor as the linear error component, and the increase in the number of sub-gates would raise the overhead more than restricting *s* to values not exceeding 2.
Without this limitation, it may be desirable to increase s as the decay exponent decreases. It turns out that this can be achieved using a probabilistic transformation mixing. Let us define $n = \left⌊\frac{s}{2}\right⌋$ and let $\overline{n} = \left[\frac{s}{2}\right]$ (the symbol [ ] is used for rounding to the nearest integer and the symbol [ ] for rounding to the nearest lower integer). For values of s greater than 2, the following gate transformation may be applied to a gate *G*(*θ*): $G \left(θ\right) \to \left\{\begin{matrix}{\prod }_{j = 1}^{2 \overline{n}} G \left({\overline{θ}}^{\left(j\right)}\right) ; & p = \left|s-2n-1\right| \\ {\prod }_{j = 1}^{2 n + 1} G \left({θ}^{\left(j\right)}\right) ; & p = 1 - \left|s-2n-1\right|\end{matrix}\right.$

*θ*^{(*j*)} **and** *θ̅*^{(*j*)} satisfy the following conditions: ${\sum }_{j = 1}^{2 \overline{n}} {\overline{θ}}^{\left(j\right)} = θ$ ${\sum }_{j = 1}^{2 n + 1} {θ}^{\left(j\right)} = θ$ ${\sum }_{j = 1}^{2 \overline{n}} \left|{\overline{θ}}^{\left(j\right)}\right| = sθ$ ${\sum }_{j = 1}^{2 n + 1} \left|{θ}^{\left(j\right)}\right| = sθ$

The optimal choice is: $\frac{{\overline{θ}}^{\left(j\right)}}{{θ}^{\left(j\right)}} = {\left(-1\right)}^{j + 1 + {p}_{j}} \frac{s + 2 H \left({\left(-1\right)}^{j + 1 + {p}_{j}}-1\right.}{2 \overline{n}}$ $\frac{{θ}_{i}^{\left(j\right)}}{{θ}_{i}} = {\left(-1\right)}^{j + 1} \frac{s + 2 H \left({\left(-1\right)}^{j + 1}-1\right.}{2 n + 2 H \left({\left(-1\right)}^{j + 1}\right)}$

*pⱼ* = 1 for *j* ≤ 2[*n*/2] and *pⱼ* = 0 for *j* > 2[*n*/2], H being the step function.

The component of the error generator that depends linearly on |*θ*| is amplified by the target amplification factor s *=* 1 + 2*δ*. The probabilistic application of transformations having different numbers of sub-gates, corresponding to numbers between 2n and 2(n + 1) depending on the case, ensures that the idle error component is also amplified by the factor *s* = 1 + 2*δ*. This behavior applies in circumstances where the idle only decay exponent Λ₀ « 1. However, as Λ₀ is typically a fraction of the total decay exponent A and the total decay exponent itself is small in situations where large values of *s* are optimal, this condition is usually satisfied.

In this case, we introduce circuit variance in addition to shot variance. However, the intrinsic circuit variance is small and is therefore not expected to pose practical difficulties. The intrinsic circuit variance can be bounded by the extreme case where we apply two circuits in which we entirely amplify either by the shorter transformation r the longer one: ${V}_{c} \leq v \left(δ\right) {e}^{- 2 \left(Λ+λ\left(f\right)\right)} {\left(1-{e}^{- {Λ}_{0}}\right)}^{2} ∼ fv \left(δ\right) {e}^{- 2 Λ} {\left(\left(λ\left(f\right)-1\right){Λ}_{0}\right)}^{2} \leq \frac{{Λ}_{0}}{30}$

Here *v*(*δ*) = 2|*n* - *δ*|(1 - 2|*n* - *δ*|), so it is bound by 0.25, and the final bound combines that with the limit of large *f,* such that *λ*(*f*) → 1, and A → 0.

Using this the optimal amplification follows $δ = \frac{λ \left(f\right)}{2 Λ}$

Where *f* now can be as large as 1 + 2*δ* as the average number of gates per amplified circuit is multiplied by that number. This creates an implicit equation, but as *λ* depends on *f* very weakly, the resulting equation is readily solved. The mitigated expectation value and the overhead continue to respectively follow the previously presented relationships: ${\left〈O\right〉}_{miti} = \frac{{\left〈O\right〉}_{noisy}^{1 + \frac{1}{2 δ}}}{{\left〈O\right〉}_{amp}^{\frac{1}{2 δ}}}$

And $W = {\left[{e}^{Λ}\left(1+Λ\frac{1 + \sqrt{f} {e}^{λ \left(f\right)}}{λ \left(f\right)}\right)\right]}^{2}$

With the difference that *f* is not bound by 2 and in fact can depend on *λ*.

### Introducing Quadratic Terms

It is observed that, to first order in the amplification parameter *δ*, the quadratic error terms 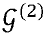 (also referred to as quadratic error component) are amplified together with the linear error terms 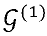 . Consequently, a modification of the previously described methods may become necessary not merely when 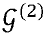 is non-negligible, but rather when the contribution 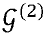 *δ*² becomes non-negligible. In such cases, an additional amplification circuit may be used. This additional amplification may be implemented using the same type of gate transformation described in connection with idle error amplification (low amplification factor), but applied with two different values of the parameter *η.* Thus, two circuits are used, each with its own value of *η.* For optimal separation of the error components, the choices *η*₁ = 0 and *η*₂ = 0.5 may be used, although any two distinct values of *η* are suitable.

For this choice, the mitigated expectation value of an observable *O* may be expressed as ${\left〈O\right〉}_{miti} = \frac{{\left〈O\right〉}_{noisy}^{2} {\left〈O\right〉}_{amp - 0}^{2 δ - 1 + \frac{1}{2 δ}}}{{\left〈O\right〉}_{amp}^{\frac{1}{2 δ}} {\left〈O\right〉}_{amp - 0.5}^{2 δ}}$

where
where "amp-0" denotes the result obtained using the amplification circuit with *η*₁ = 0 (i.e. the circuit obtained using the transformation replacing *G*(*θ*) by *G*(*θη*₁)*G*(*θ*(1 *- η*₁)), "amp-0.5" denotes the result obtained using the amplification circuit with *η*₂ = 0.5 (i.e. the circuit obtained using the transformation replacing *G*(*θ*) by *G*(*θη*₂)*G*(*θ*(1 - *η*₂)), and "amp" denotes the result obtained using the transformation *G*(*θ*(1 *+ δ*))*G*(-*θδ*).

The optimization of *δ* follows the relationship $δ = \frac{λ \left(1\right)}{2 {Λ}_{1}}$. However, a closed expression for the overhead may be difficult to obtain in this case and may require a numerical optimization.

A rare but noteworthy case may arise when the quadratic error component 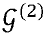 is significantly larger than the idle error component 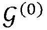 . In such a situation, the addition of idle errors may be acceptable, and the overall overhead may be reduced by limiting the number of noise-amplified circuits to two. To achieve this, the following gate transformations may be used for the amplified circuits: $G \left(θ\right) \to G \left(θ\left(1+{δ}_{+}\right)\right) G \left({θδ}_{-}\right) G \left(-θδ\right)$ $G \left(θ\right) \to G \left({θη}_{1}\right) G \left({θη}_{2}\right) G \left(θ\left(1-{η}_{1}-{η}_{2}\right)\right)$ where 0 ≤ *ηⱼ* ≤ 0.5. The second amplification, using parameters 0 ≤ *ηⱼ* ≤ 0.5, introduces twice the idle error of the previously used transformations. Any choice of *ηⱼ* in this interval may be used. However, to avoid amplification of the quadratic error component, the choice *ηⱼ* = 0 is preferred.

The first transformation, when applied with ${δ}_{\pm } = \frac{δ \pm \left(\sqrt{1 + 2 δ - 3 {δ}^{2}}-1\right)}{2}$ amplifies both the linear and quadratic components of the error generator by the factor 1 + 2*δ,* thereby eliminating the need for an additional amplification circuit.

### Revisiting Quadratic Terms for High Amplification Factors

In light of the probabilistic transformation described above $G \left(θ\right) \to \left\{\begin{matrix}{\prod }_{j = 1}^{2 \overline{n}} G \left({\overline{θ}}^{\left(j\right)}\right) ; & p = \left|s-2n-1\right| \\ {\prod }_{j = 1}^{2 n + 1} G \left({θ}^{\left(j\right)}\right) ; & p = 1 - \left|s-2n-1\right|\end{matrix}\right.$ it is useful to revisit the method described above for mitigating quadratic error components when large amplification factors are desired. Although multiple options exist, only two categories of transformations provide optimal behaviour. One category reduces the quadratic error as much as possible, while the other maximally amplifies it.

Reduction of the quadratic error component may be accomplished by the transformation $G \left(θ\right) \to G {\left(\frac{θ}{N}\right)}^{N}$ which amplifies the idle error component by a factor of *N,* while reducing the quadratic error component by the same factor. This transformation generalises the first method described previously in the context of idle-error amplification.

To maximize the amplification of the quadratic error component, the following transformation may be employed: $G \left(θ\right) \to G \left(θ\left(1+δ\right)\right) G \left(-θδ\right) G {\left(0\right)}^{N - 2}$

This transformation amplifies the idle error component by a factor *N,* amplifies the linear error component by a factor 1 + 2*δ,* and amplifies the quadratic error component by a factor 1 + 2*δ* + 2*δ*². This behavior may be contrasted with the quadratic amplification obtained from the probabilistic transformation 1 + 2*δ* + (-2δ³ + (4*n̅ -* 3)*δ*² - 2(*n̅* - 1)²*δ* + *n* + *n̅* - *n̅*²)/(*n*(*n* + 1)), which is always lower if *δ* > 0.5. For large *δ*, the contrast between the two approaches becomes substantial. Moreover, the second method offers an additional practical advantage: it does not require a separate idle-amplified circuit of the form $G \left(θ\right) G {\left(0\right)}^{N - 1}$ against which it must be compared. In other words, the second method can be implemented using only two amplification circuits, rather than three circuits required for the first method. This leads to a non-trivial optimization that depends on the noise characteristics of the system. For small deviations from perfectly linear error scaling, it is advantageous to transition from the first method to the second method once *δ* ≳ 0.75, corresponding approximately to A ≲ 0.85.

For the first method, the mitigated expectation value may be expressed as: ${\left〈O\right〉}_{miti} = \frac{{\left〈O\right〉}_{noisy}^{1 + \frac{1}{2 δ}}}{{\left〈O\right〉}_{amp}^{\frac{1}{2 δ}}} {\left(\frac{{\left〈O\right〉}_{amp - 0}}{{\left〈O\right〉}_{amp - quad}}\right)}^{\frac{- 2 {δ}^{3} + \left(4\overline{n}-3\right) {δ}^{2} - 2 {\left(\overline{n}-1\right)}^{2} δ + n + \overline{n} - {\overline{n}}^{2}}{nδ \left(2n+1\right)}}$

For the second method, the mitigated expectation values may be expressed as: ${\left〈O\right〉}_{miti} = \frac{{\left〈O\right〉}_{noisy}^{1 + \frac{1}{2 δ}} {\left〈O\right〉}_{amp - quad}^{\frac{- 2 {δ}^{3} + \left(4\overline{n}-3\right) {δ}^{2} - 2 {\left(\overline{n}-1\right)}^{2} δ + n + \overline{n} - {\overline{n}}^{2}}{2 δ \left[2{δ}^{3}+2\left({n}^{2}+n-2\overline{n}\right)\left.+3\right){δ}^{2}+2{\left(\overline{n}-1\right)}^{2}δ-n-\overline{n}+{\overline{n}}^{2}\right]}}}{{\left〈O\right〉}_{amp}^{\frac{n \left(n+1\right) δ}{\left[2{δ}^{3}+2\left({n}^{2}+n-2\overline{n}\right)\left.+3\right){δ}^{2}+2{\left(\overline{n}-1\right)}^{2}δ-n-\overline{n}+{\overline{n}}^{2}\right]}}}$

### Context Dependent Errors

The methods described above have been presented at the level of individual gates. However, in some quantum processors the noise affecting a gate may depend on the sequence of gates that preceded it, representing a non-Markovian noise model. This situation may arise, for example, in systems in which qubits are physically shuttled to interaction zones. In such systems, the location of the qubits before shuttling depends on the gates previously applied, and the errors associated with the shuttling operation itself may depend on this context. In these circumstances, applying the amplification transformation to each gate individually (for example, replacing each gate by using the transformation $G \left(θ\right) \to G \left(θ\left(1+δ\right)\right) G \left(-θδ\right)$ may alter the context in which the subsequent gates operate, and may therefore amplify less noise than intended. In particular, in systems that use shuttling, applying the next gate to the same qubits may reduce the errors introduced by the shuttling process, which we also seek to amplify for the purposes of zero-noise extrapolation.

To address this, the methods described above may be applied not at the level of individual gates, but at the level of unitary blocks (i.e. blocks of commuting gates). We define the circuit as $U = {\prod }_{i} {G}_{i} = {\prod }_{l} {B}_{l} , {B}_{l} = {\prod }_{i ∈ l} {G}_{i}$ where each block *B*ₗ consists of gates that mutually commute, i.e., [*Gᵢ, Gⱼ*] = 0 for all *i,j* ∈ *l*. The block sizes may be chosen as large as possible, thereby minimizing the number of blocks in the circuit.

Once the circuit is partitioned into such blocks, the transformations may be applied to the blocks rather than to individual gates. For instance, the amplification ${G}_{i} \left({θ}_{i}\right) \to {G}_{i} \left({θ}_{i}\left(1+δ\right)\right) {G}_{i} \left(-{θ}_{i}δ\right)$

May be implemented at the block level as ${B}_{l} \to \left({\prod }_{i ∈ l} {G}_{i} \left({θ}_{i}\left(1+δ\right)\right)\right) \left({\prod }_{i ∈ l} {G}_{i} \left(-{θ}_{i}δ\right)\right)$

Because the gates within a block commute, the effect of this block level transformation is identical to that of the corresponding gate level transformation when the noise model is Markovian (and non-coherent). Otherwise, the block level application amplifies also the context dependent errors.

### Comparison to Existing ZNE Methods

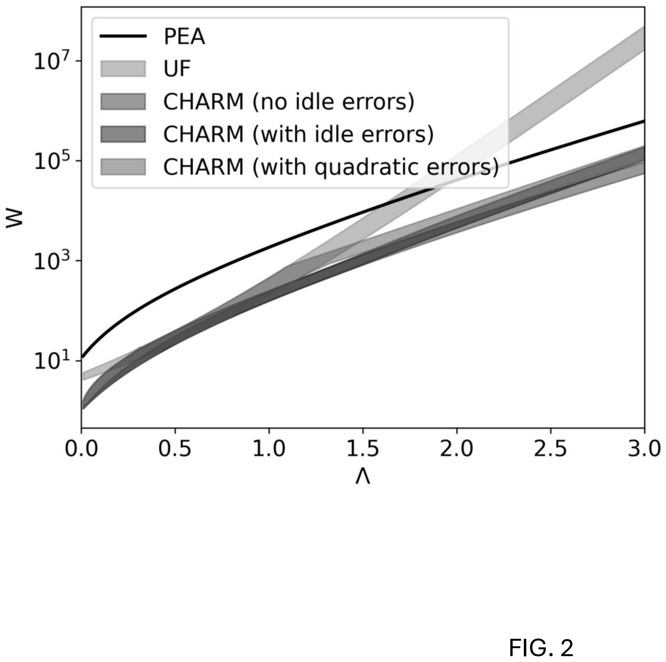

The methods presented herein enable controlled amplification of noise with minimal heuristic assumptions, in a manner similar to probabilistic error amplification (PEA). With respect to mitigation overhead, the methods presented herein exhibit significantly improved scaling compared to standard unitary folding based zero noise extrapolation (UF-ZNE). Unitary folding imposes a minimal amplification factor of 3 for the transformed circuit, resulting in an exponential overhead that scales at least as *e*^{6Λ} for large decay exponents. This dependence dominates the overhead for high-volume circuits and is substantially greater than the overhead associated with CHARM, as illustrated in **FIG. 2****.**

The methods presented herein also achieve a lower overhead than PEA, as shown in **FIG. 2**. This advantage arises primarily from the circuit-to-circuit variance introduced by PEA, which requires additional sampling overhead to suppress. An additional benefit of the method presented herein is that they do not require characterization of the noise model. The absence of a characterization step reduces overhead because characterization itself consumes quantum processor time, and it avoids inaccuracies that may arise from imperfect or fluctuating noise-model estimates. Moreover, the methods presented herein can mitigate noise components that are not readily amplified using PEA, such as leakage errors.

The data presented in **FIG. 2** indicate that the methods presented herein are particularly effective for high volume circuits and that its overhead depends only weakly on the presence of idle or quadratic error components, provided that those components do not dominate the overall noise. **FIG.2** illustrates the overhead associated with several zero-noise extrapolation methods. For PEA, the curve does not include the characterization time. It is assumed that the circuit execution time is ten times larger than the shot time. This is a reasonable estimate for many trapped ion systems, although the exact value depends on the quantum processor hardware. A single shot is used for each circuit. The band regions for the methods disclosed herein represent the range of possible values for the shot time ratio *f,* which varies between 1 and the amplification factor at each value of the decay exponent. For the idle error component, the model uses Λ₀ = 0.2 A, and for the quadratic error component it uses Λ₂ = 0.1 Λ. The unitary folding method is shown for the minimal folding factor of 3, and its band region represents the range of amplified shot time factors between 1 and 3.

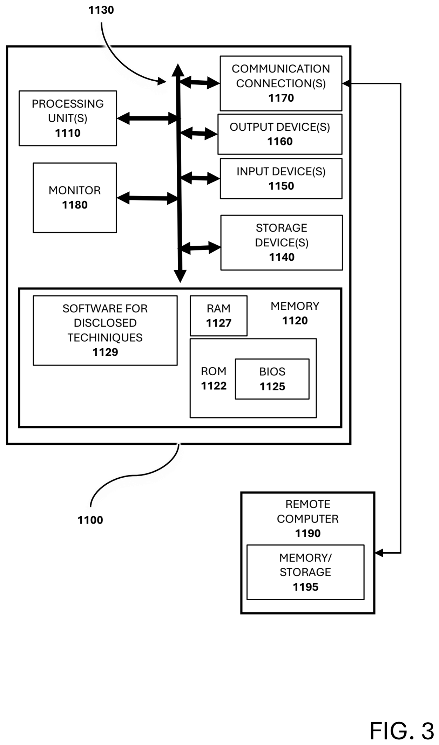

**FIG. 3** and the following discussion are intended to provide a brief, general description of an exemplary computing environment in which the disclosed technology may be implemented. Although not required, the disclosed technology is described in the general context of computer executable instructions, such as program modules, being executed by a personal computer (PC). Generally, program modules include routines, programs, objects, components, data structures, etc., that perform particular tasks or implement particular abstract data types. Moreover, the disclosed technology may be implemented with other computer system configurations, including handheld devices, multiprocessor systems, microprocessor-based or programmable consumer electronics, network PCs, minicomputers, mainframe computers, and the like. The disclosed technology may also be practiced in distributed computing environments where tasks are performed by remote processing devices that are linked through a communications network. In a distributed computing environment, program modules may be located in both local and remote memory storage devices.

With reference to **FIG. 3**, an exemplary system for implementing the disclosed technology includes a general purpose (classical) computing device in the form of an exemplary conventional PC **1100,** including one or more processing units **1110,** a system memory **1120,** and a system bus **1130** that couples various system components including the system memory **1120** to the one or more processing units **1110.** The system bus **1130** may be any of several types of bus structures including a memory bus or memory controller, a peripheral bus, and/or a local bus using any of a variety of bus architectures. The exemplary system memory **1120** includes read only memory (ROM) **1122** and random access memory (RAM) **1127**. A basic input/output system (BIOS) **1125,** containing the basic routines that help with the transfer of information between elements within the PC **1100,** is stored in ROM **1122.** As shown in **FIG. 3**, the system memory **1120** stores computer-executable instructions for performing any of the disclosed techniques (e.g., selecting a target amplification factor, computing gate transformations, transforming quantum circuits, collecting expectation values from a quantum circuit and transformed quantum circuits, computing a mitigated expectation value using zero noise extrapolation, etc.) in respective memory portions (shown generally as executable software **1129** for performing any embodiment of the disclosed techniques)).

The exemplary PC **1100** further includes one or more storage devices **1140**, such as a hard disk drive for reading from and writing to a hard disk, a magnetic disk drive for reading from or writing to a removable magnetic disk, and/or an optical disk drive for reading from or writing to a removable optical disk (such as a CD-ROM or other optical media). Such storage devices can be connected to the system bus **1130** by a hard disk drive interface, a magnetic disk drive interface, and/or an optical drive interface, respectively. The drives and their associated computer readable media provide nonvolatile storage of computer-readable instructions, data structures, program modules, and other data for the PC **1100.** Other types of computer-readable media which can store data that is accessible by a PC, such as magnetic cassettes, flash memory, digital video disks, CDs, DVDs, RAMs, NVRAMs, ROMs, and the like, may also be used in the exemplary operating environment. As used herein, the terms storage, memory, and computer-readable media do not include or encompass propagating carrier waves or signals per se.

A number of program modules may be stored in the storage devices **1140**, including an operating system, one or more application programs, other program modules, and program data. Storage of results of quantum measurements and instructions for obtaining such measurements (and/or instructions for performing any embodiment of the disclosed technology) can be stored in the storage devices **1140**. A user may enter commands and information into the PC **1100** through one or more input devices **1150** such as a keyboard and a pointing device such as a mouse. Other input devices may include a digital camera, microphone, joystick, game pad, satellite dish, scanner, or the like. These and other input devices are often connected to the one or more processing units **1110** through a serial port interface that is coupled to the system bus **1130,** but may be connected by other interfaces such as a parallel port, game port, or universal serial bus (USB). A monitor **1180** or other type of display device is also connected to the system bus **1130** via an interface, such as a video adapter. Other peripheral output devices **1160,** such as speakers and printers (not shown), may be included. In some cases, a user interface is displayed so that a user can input a circuit for synthesis, and verify successful synthesis.

The PC **1100** may operate in a networked environment using logical connections to one or more remote computers, such as a remote computer **1190.** In some examples, one or more network or communication connections **1170** are included. The remote computer **1190** may be another PC, a server, a router, a network PC, or a peer device or other common network node, and typically includes many or all of the elements described above relative to the PC **1100,** although only a memory storage device **1195** has been illustrated in **FIG. 3**. The personal computer **1100** and/or the remote computer **1190** can be connected to a logical a local area network (LAN) and a wide area network (WAN). Such networking environments are commonplace in offices, enterprise wide computer networks, intranets, and the Internet.

When used in a LAN networking environment, the PC **1100** is connected to the LAN through a network interface. When used in a WAN networking environment, the PC **1100** typically includes a modem or other means for establishing communications over the WAN, such as the Internet. In a networked environment, program modules depicted relative to the personal computer **1100,** or portions thereof, may be stored in the remote memory storage device or other locations on the LAN or WAN. The network connections shown are exemplary, and other means of establishing a communications link between the computers may be used.

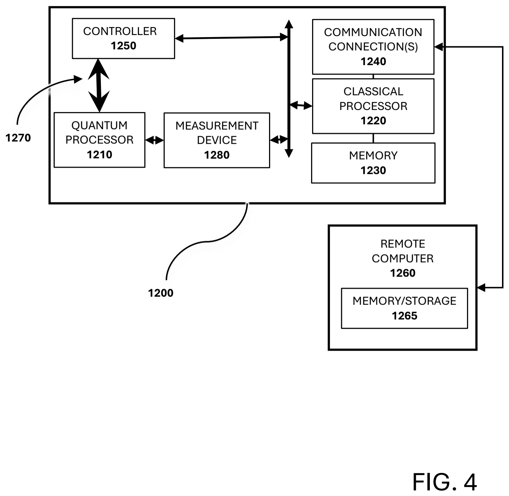

With reference to **FIG. 4**, an exemplary system for implementing the disclosed technology includes computing environment **1200,** The environment includes one or more quantum processing unit(s) **1210** including one or more monitoring/measuring device(s) **1280.** The quantum processing unit(s) execute quantum circuits that are provided by a classical processing unit **1220.** The quantum circuits are downloaded into or used to program or configure the quantum processing unit(s) **1210** (e.g., via control lines (quantum bus) **1270).** Procedures according to any of the disclosed embodiments (e.g. a high-level description of the set of gate sequences to be applied to perform the presently disclosed technology) are stored in a memory **1230.**

With reference to **FIG. 4**, the high-level description of a quantum software may be translated into sets of gates (e.g., a sequence of quantum circuits). Such high-level descriptions may be stored, as the case may be, on one or more external computers **1260** outside the computing environment **1200** utilizing one or more memory and/or storage device(s) **1265,** then downloaded as necessary into the computing environment **1200** via one or more communication connection(s) **1240.** Quantum circuits (according to any of the disclosed embodiments) are coupled to the quantum processor **1210.**

The quantum processing unit(s) can be one or more of, but are not limited to: (a) an ion trap quantum computer; or (b) a cold atom quantum computer. The sets of gates (e.g., using any of the disclosed embodiments) can be sent into (or otherwise applied to) the quantum processing unit(s) via control lines **1270** at a controller **1250** of the classical processor **1220.** In the illustrated example, the desired quantum computing process is implemented with the aid of one or more controllers **1250** that are specially adapted to control a corresponding one of the quantum processor(s) **1210.** The classical processor **1220** can further interact with measuring/monitoring devices (e.g., readout devices) **1280** to help control and implement the desired quantum computing process (e.g., by reading or measuring out data results from the quantum processing units once available, etc.). The classical processor may include any relevant functionality described with reference to the classical computing system of **FIG. 3****.**

Having described and illustrated the principles of the disclosed technology with reference to the illustrated embodiments, it will be recognized that the illustrated embodiments can be modified in arrangement and detail without departing from such principles. For instance, elements of the illustrated embodiments shown in software may be implemented in hardware and vice-versa. Also, the technologies from any example can be combined with the technologies described in any one or more of the other examples. It will be appreciated that procedures and functions such as those described with reference to the illustrated examples can be implemented in a single hardware or software module, or separate modules can be provided. The particular arrangements above are provided for convenient illustration, and other arrangements can be used.

## Claims

1. A computer implemented method of error mitigation for a quantum circuit to be executed on a quantum processor, the quantum circuit comprising one or more quantum gate *G*(*θ*) with a gate parameter *θ* and an error generator 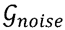 (*θ*) having affine dependence on an absolute value of the gate parameter such that 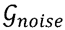 (*θ*) *=* 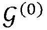 + 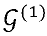 |θ|, wherein 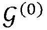 defines an idle error component and 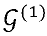 defines a linear error component, the method comprising:
i. selecting a target amplification factor s for the linear error component;
ii. when the target amplification factor is such that *s* ≥ 2, computing one or more gate transformations, each gate transformation being configured to transform said quantum gate into a product of sub-gates, wherein:
a. each sub-gate is an instance of the quantum gate *G* operated with a parameter value *θⱼ* and the parameter values over the product satisfy a parameter preservation criterion ∑*ⱼ θⱼ = θ*;
b. a transformed error generator of the sub-gates product comprises a transformed idle error component and a transformed linear error component, and when at least two gate transformations are computed:
- the transformed idle error component is an amplification of the idle error component by different idle amplification factors for each of said at least two gate transformations;
- the transformed linear error component is an amplification of the linear error component by the same target amplification factor for said at least two gate transformations;
iii. executing the quantum circuit and a transformed quantum circuit, in which, for each occurrence of the quantum gate *G*(*θ*) across a set of circuit executions, one of said gate transformations is selected according to a probability distribution configured such that an expectation, over said probability distribution, of the idle amplification factors equals the target amplification factor *s;*
iv. collecting a noisy expectation value of the observable from executions of the quantum circuit and a noise amplified expectation value from executions the transformed quantum circuit;
v. computing a mitigated expectation value of the observable by extrapolating to zero noise using the noisy expectation value and the noise amplified expectation value.

2. The method of claim 1, wherein the target amplification factor s for the error generator is selected based on a decay of an expectation value of an observable in the quantum circuit.

3. The method of any of the preceding claims, wherein the target amplification factor s is set based on a decay exponent A of an expectation value of an observable in the quantum circuit and a shot time ratio *f* between the transformed quantum circuit and the quantum circuit, according to: $s = 1 + 2 δ ; δ = \frac{λ \left(f\right)}{2 Λ} ;$ *λ* being the solution of: $\sqrt{f} \left(λ\left(f\right)-1\right) {e}^{λ \left(f\right)} = 1$

4. The method of any of the preceding claims, wherein said at least two gate transformations are defined by two sets of parameter values $\left\{{θ}_{j}^{1}\right\}$ and $\left\{{θ}_{j}^{2}\right\}$, each satisfying ${\sum }_{j} \left|{θ}_{j}^{k}\right| = s \left|θ\right|$ for *k* ∈{1,2}.

5. The method of any of the preceding claims, wherein the number of sub-gates differs between the two gate transformations, thereby providing different idle amplification factors for each gate transformation.

6. The method of any of the preceding claims, wherein, when s is non-integer, the different idle amplification factors of at least two of said gate transformations comprise:
i. a first idle amplification factor equal to a greatest integer that is strictly lower than s; and
ii. a second idle amplification factor equal to a least integer that is strictly greater than s.

7. The method of claim 1, wherein the target amplification factor s is an integer, and wherein only one gate transformation is computed and applied across the set of circuit executions.

8. The method of any of the preceding claim, further comprising, when the target amplification factor s is such that 1 *< s* < 2:
i. computing a linear amplification gate transformation and an idle amplification transformation, each configured to transform the quantum gate into a product of sub-gates, wherein each sub-gate is an instance of the quantum gate *G* operated with a parameter value *θⱼ* and the parameter values over the product satisfy a parameter preservation criterion ∑*ⱼ θⱼ = θ*;
wherein a transformed error generator associated with each sub-gate product comprises a transformed idle error component and a transformed linear error component, and:
- in the linear amplification transformation, the transformed linear error component is an amplification of the linear error component by a first linear amplification factor and the transformed idle error component is an amplification of the idle error component by a first idle amplification factor; and
- in the idle amplification transformation, the transformed idle error component is an amplification of the idle error component by a second idle amplification factor and the transformed idle error component is an amplification of the idle error component by a second idle amplification factor;
ii. collecting a noisy expectation value obtained from executions of the quantum circuit, a linear-amplified expectation value obtained from executions of the circuit transformed by the linear amplification transformation, and an idle amplified expectation value obtained from executions of the circuit transformed by the idle amplification transformation;
iii. computing a mitigated expectation value of the observable by extrapolating to zero noise using the noisy expectation value, the linear amplified expectation value, and the idle amplified expectation value.

9. The method of claim 8, wherein the first idle amplification factor and the second idle amplification factor are equal.

10. The method of any of claim 8 and 9, wherein the second linear amplification factor is equal to 1.

11. The method of any of the preceding claims, wherein the gate transformations are applied to blocks of commuting gates.

12. The method of any of the preceding claims, wherein the affine dependence of the error generator further comprises a quadratic term proportional to θ².

13. The method of claim 12, further comprising computing a quadratic transformation that transforms *G*(*θ*) into a product of N sub-gates *G*(*θ*/*N*)*^{N}* with an integer *N* ≥ 2, such that a corresponding idle error component is amplified by a factor *N* and a corresponding quadratic error component is amplified by a factor 1/*N*; and comprising additionally executing and collecting expectation value measurement of the observable for the quadratically transformed quantum circuit; and wherein the mitigated expectation value is computed using said collected expectation value of the quadratically transformed quantum circuit.

14. The method of claim 12, further comprising computing a quadratic transformation transforms *G*(*θ*) into a product *G*(*θ*(1 + *δ*)) *G*(-*θδ*) *G*(0)^{*N*-2} with an integer *N* ≥ 2 and a real parameter *δ* > 0, such that a corresponding idle error component is amplified by a factor *N,* a corresponding linear error component is amplified by a factor 1 + 2*δ,* and a corresponding quadratic error component is amplified by a factor 1 + 2*δ* + 2*δ*²; and comprising additionally executing and collecting expectation value measurement of the observable for the quadratically transformed quantum circuit; and wherein the mitigated expectation value is computed using said collected expectation value of the quadratically transformed quantum circuit.

15. A system for error mitigation of a quantum circuit, the system comprising:
i. a quantum processor configured to execute quantum circuits comprising one or more quantum gates *G*(*θ*) with a gate parameter *θ*, each quantum gate being associated with an error generator 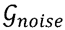 (*θ*) having affine dependence on an absolute value of the gate parameter such that 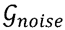 (*θ*) *=* 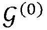 + 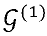 |*θ*|, wherein 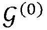 defines an idle error component and 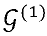 defines a linear error component; and
ii. a classical controller comprising a processor and a memory storing instructions that, when executed by the processor, cause the classical controller to:
a. select a target amplification factor *s*for the linear error component;
b. when the target amplification factor satisfies *s* ≥ 2, compute one or more gate transformations, each gate transformation being configured to transform the quantum gate *G*(*θ*) into a product of sub gates *G*(*θⱼ*) with parameter values {*θⱼ*} that satisfy a parameter preservation criterion Σ*ⱼ θⱼ = θ*, the product of sub gates being associated with a transformed error generator comprising a transformed idle error component and a transformed linear error component, and when at least two gate transformations are computed:
- the transformed idle error component is an amplification of the idle error component by different idle amplification factors for each of said at least two gate transformations;
- the transformed linear error component is an amplification of the linear error component by the same target amplification factor for said at least two gate transformations;
c. cause the quantum processor to execute the quantum circuit and to execute a transformed quantum circuit in which, for each occurrence of the quantum gate *G*(*θ*) across a set of circuit executions, one of the gate transformations is selected according to a probability distribution configured such that an expectation, over the probability distribution, of the idle amplification factors equals the target amplification factor s;
d. collect a noisy expectation value of at least one observable from executions of the quantum circuit and a noise amplified expectation value of the observable from executions of the transformed quantum circuit; and;
e. compute a mitigated expectation value of the observable by extrapolating to zero noise using the noisy expectation value and the noise amplified expectation value.
